# EUROPÄISCHE PATENTSCHRIFT

(11) **EP 1 965 096 B1**
(45) Veröffentlichungstag und Bekanntmachung des Hinweises auf die Patenterteilung: **30.11.2011**
(21) Anmeldenummer: 08102019.0
(22) Anmeldetag: 26.02.2008
(51) Int. Cl.: F16H 1/46, F16H 37/04, B61B 12/10

(54) **Seilbahngetriebe mit mehreren Planetenstufen**
Funicular gear with several planet levels
Engrenage de téléphérique doté de plusieurs étages planétaires

(30) Priorität: 28.02.2007 DE 202007003043 U
(43) Veröffentlichungstag der Anmeldung: 03.09.2008
(73) Patentinhaber: Lohmann & Stolterfoht GmbH, 58455 Witten (DE)
(72) Erfinder: Hälbig, Karl-Heinz, 44866 Bochum (DE); Klocke, Rainer, 58453 Witten (DE)
(74) Vertreter: Kietzmann, Lutz

(56) Entgegenhaltungen:
- EP-A- 0 165 231
- EP-A- 0 538 237
- EP-A1- 1 396 408
- DE-A1- 3 916 438
- DE-A1- 4 025 736
- DE-A1- 19 857 914
- DE-C- 878 140
- US-B1- 6 619 157
- "Aktive und passive Massnahmen zur Verminderung von Getriebegeräuschen ED - Naunheimer; Bertsche und Lechner", 1 January 2007 (2007-01-01), FAHRZEUGGETRIEBE, SPRINGER VERLAG, DE, PAGE(S) 277, XP007915275,

## Beschreibung

Die vorliegende Erfindung betrifft ein Seilbahngetriebe zum Antrieb einer Seilscheibe einer Seilbahn, mit mehreren in einem vertikal ausgerichteten Getriebegehäuse untergebrachten hintereinander geschalteten Planetenstufen zur Übersetzung der von einem Motor erzeugten Antriebsdrehzahl ins Langsame für die Seilscheibe. Ein entsprechendes Getriebe wird im Oberbegriff des Anspruchs 1 beschrieben und ist aus dem Dokument EP 1 396 408 A1 bekannt.

Das Einsatzgebiet der vorliegenden Erfindung erstreckt sich auf Seilbahnen. Es kommen in der Regel zwei Seilscheiben zum Einsatz, über welche ein Schleppseil zur Güter- oder Personenförderung läuft und durch eine angetriebene Seilscheibe bewegt wird. Derartige Seilbahnen kommen üblicherweise in Bergregionen zum Einsatz, wobei die eine Seilscheibe in einer Talstation und die andere Seilscheibe in einer Bergstation der Seilbahn angeordnet ist. Die sich meist seitens der Bergstation befindliche angetriebene Seilscheibe benötigt ein recht hohes Antriebsmoment bei gleichzeitig kleiner Drehzahl. Dieses wird ausgehend von einem Motor - meist einem Elektromotor - unter Zwischenschaltung eines die gewünschte Untersetzung liefernden Seilbahngetriebes erzeugt. Beim Seilbahngetriebe handelt es sich meist um ein recht großbauendes stationäres Getriebe mit einem hohen Übersetzungsfaktor. Die vorliegende Erfindung widmet sich geräuschoptimierenden Maßnahmen für ein solches Seilbahngetriebe.

Aus dem Produktkatalog "Planetengetriebe REDULUS" (Drucknummer RG 76120/10.05 1/28) der Bosch Rexroth AG geht eine explizit zum Einsatz für ein Seilbahngetriebe geeignete Getriebekonstruktion hervor. Diese ist flexibel hinsichtlich der zu verwendenden Antriebe sowie der Montage und der Wellenanordnung. Allen Getrieben gemeinsam ist die Verwendung mehrerer innerhalb des Getriebegehäuses hintereinander geschalteter Planetenstufen, welche den erforderlichen hohen Übersetzungsfaktor bei gleichzeitig kompaktem Aufbau liefern.

Nachteilig bei dem Einsatz als Seilbahngetriebe hat sich wegen jüngster gesetzlicher Vorschriften die Geräuscheemmision erwiesen. Die bei den Planentenstufen verwendeten geradverzahnten Zahnräder entwickeln im Betrieb in ganz unterschiedlichen Frequenzspektren beachtliche Emmisionspegel.

Es ist daher die Aufgabe der vorliegenden Erfindung ein Seilbahngetriebe zu schaffen, welches einen minimalen Lärmpegel bei gleichzeitig hohem Übersetzungsfaktor und kompaktem Aufbau besitzt.

Die Aufgabe wird ausgehend von einem Seilbahngetriebe gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass eine antriebsseitige Planetenstufe des Seilbahngetriebes eine Schrägverzahnung aufweist, wogegen eine abtriebsseitige Planentenstufe eine Geradverzahnung besitzt.

Der Vorteil der erfindungsgemäßen Lösung liegt insbesondere darin, dass durch eine gezielte, den Gesamtaufwand zur Herstellung des Getriebes nicht wesentlichen erhöhende konstruktive Maßnahme zur Herbeiführung des gewünscht geringen Geräuschpegels dienlich ist. Denn anstatt das gesamte Getriebe mit schrägverzahnten Zahnrädern zu bestücken, hat es sich als ausreichend erwiesen, lediglich die antriebsseitige Planentenstufe, also die Planetenvorstufe schräg verzahnt auszubilden. Hierdurch wird der Lärmpegel in dem für das menschliche Ohr wahrnehmbaren Bereich von etwa 200 bis 1000 Hz signifikant reduziert. Denn in diesem Bereich leistet die antriebsseitige Planetenstufe einen größeren Beitrag zum Lärmpegel als die abtriebsseitige Planetenstufe. Die gezielte erfindungsgemäße Maßnahme stellt somit eine kleine Änderung mit hohem Effekt dar.

Weiterhin schliesst die Erfindung eine achsversetzte Anordnung der Antriebswelle gegenüber der Abtriebswelle ein. Dies wird beim erfindungsgemäßen Seilbahngetriebe dadurch erzielt, dass die Antriebswelle über eine Stirnradstufe versetzt gegenüber der Getriebeachse angeordnet ist. Dabei ist die Stirnradstufe ebenfalls mit schräg verzahnten Stirnrädern ausgestattet, um die Geräuschemmission von dort aus nicht wieder zu vergrößern.

Gemäß einer weiteren die Erfindung im Hinblick auf die Geräuschemmission verbessernde Maßnahme wird vorgeschlagen, die schräg verzahnten Zahnräder der antriebsseitigen Planetenstufe für beide Drehrichtungen korrekturzuschleifen. Durch einen solchen Korrekturschliff wird sichergestellt, dass in beiden Drehrichtungen, bei der Seilbahn also meist bergauf und bergab, in etwa die selbe geringe Geräuschemmission erzielbar ist.

Vorzugsweise ist der das erfindungsgemäße Seilbahngetriebe antreibende Motor als ein Elektromotor ausgeführt, welcher direkt am Getriebegehäuse angeflanscht ist. Somit ergibt sich insgesamt eine kompakte Bauform für die Motor-Getriebe-Einheit.

Aus Sicherheitsgründen sollte der Elektromotor ein Bremsmotor sein, welcher eine auf die Antriebswelle des Seilbahngetriebes wirkende Bremsscheibe umfasst, die von mindestens einem getriebefest angeordneten Bremssattel festsetzbar ist. Diese Maßnahme erspart die Anbringung externer Bremseinrichtungen und trägt zum Konstruktionsziel einer kompakten Baueinheit bei.

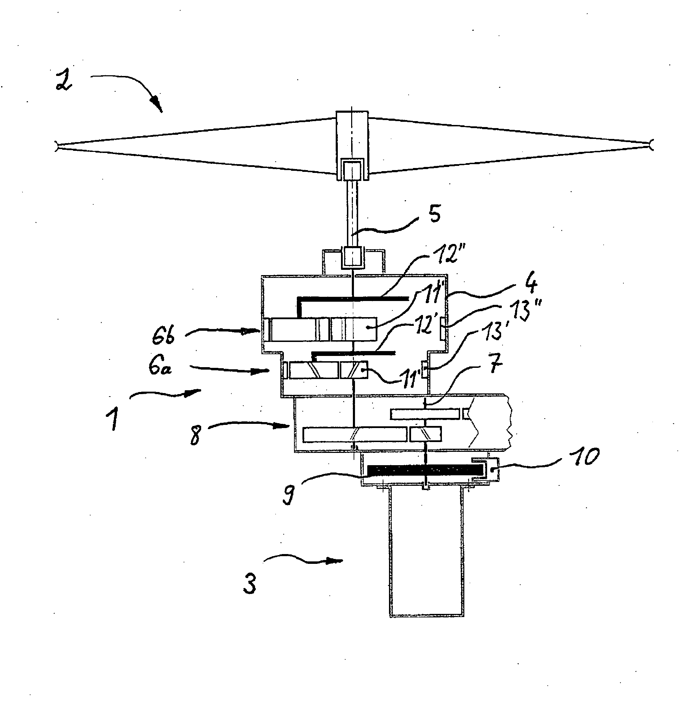

Weitere die Erfindung verbessernde Maßnahmen werden nachstehend gemeinsam mit der Beschreibung eines bevorzugten Ausführungsbeispiels anhand der Erfindung näher dargestellt. Die einzige Figur zeigt eine schematische Seitenansicht eines Seilbahnantriebes mit einem Seilbahngetriebe.

Gemäß Figur ist abtriebsseitig eines Seilbahngetriebes 1 eine Seilscheibe 2 zum Antrieb eines - nicht weiter dargestellten - Zugmittels einer Seilbahn angeordnet. Das Seilbahngetriebe 1 wird antriebsseitig über einen angeflanschten Motor 3 betrieben, der in diesem Ausführungsbeispiel als Elektromotor ausgeführt ist.

Ein Getriebegehäuse 4 des Seilbahngetriebes 1 ist entlang seiner Getriebeachse 5 vertikal ausgerichtet. Innerhalb des Getriebegehäuses 4 sind zwei hintereinander geschaltete Planetenstufen 6a, 6b untergebracht. Die beiden Planetenstufen 6a und 6b übersetzen die vom Motor 3 gelieferte Drehzahl ins Langsame, um die Antriebsdrehzahl für die Seilscheibe 2 zu erzeugen.

Die Antriebswelle 7 des Seilbahngetriebes 1 ist über eine Stirnradstufe 8 achsversetzt gegenüber der Getriebeachse 5 angeordnet. Am Motor 3 ist ferner eine Bremsscheibe 9 vorgesehen, welche mit einem Bremssattel 10 zur Bildung einer Betriebsbremse zusammenwirkt. Insoweit ist der Motor 3 hier nach Art eines Bremsmotors ausgebildet.

Sowohl die antriebsseitige Planetenstufe 6a als auch die Stirnradstufe 8 sind mit schräg verzahnten Stirnrädern ausgestattet, um die Geräuschemmission zu minimieren. Dem gegenüber ist die abtriebsseitige Planetenstufe 6b des Seilbahngetriebes 1 jedoch mit einer herkömmlichen Geradverzahnung versehen.

Bei der antriebsseitigen Planetenstufe 6a erfolgt der Antrieb über ein Sonnenrad 11' und der Abtrieb über einen Planetenträger 12'. Ein Hohlrad 13' der antriebsseitigen Planetenstufe 6a ist dagegen ortsfest mit dem Getriebegehäuse 4 ausgebildet.

Bei der abtriebsseitigen Planetenstufe 6b erfolgt der Antrieb ebenfalls über ein Sonnenrad 11" und der Abtrieb über einen Planententräger 12", welcher entlang der Getriebeachse 5 über eine Welle die Verbindung zur Seilscheibe 2 herstellt. Auch hier ist das Hohlrad 13" ortsfest mit dem Getriebegehäuse 4 ausgebildet. Durch diese Hintereinaderschaltung der beiden Planetenstufen 6a und 6b wird das erforderliche hohe Übersetzungsverhältnis des Seilbahngetriebes 1 erreicht.

### Bezugszeichenliste

- 1: Seilbahngetriebe
- 2: Seilscheibe
- 3: Motor
- 4: Getriebegehäuse
- 5: Getriebeachse
- 6: Planetenstufe
- 7: Antriebswelle
- 8: Stirnradstufe
- 9: Bremsscheibe
- 10: Bremssattel
- 11: Sonnenrad
- 12: Planetenträger (mit Planetenrädern)
- 13: Hohlrad

## Patentansprüche

1. Seilbahngetriebe (1) zum Antrieb einer Seilscheibe (2) einer Seilbahn, mit mehreren in einem vertikal ausgerichteten Getriebegehäuse (4) untergebrachten hintereinander geschalteten Planetenstufen (6a, 6b) zur Übersetzung der von einem Motor (3) erzeugten Antriebsdrehzahl ins Langsame für die Seilscheibe (2),
**dadurch gekennzeichnet, dass** eine antriebsseitige Planetenstufe (6a) eine Schrägverzahnung aufweist, wogegen eine abtritebsseitige Planentenstufe (6b) eine Geradverzahnung besitzt, wobei die Antriebswelle (7) über eine Stirnradstufe (8) achsversetzt gegenüber der Getriebeachse (5) angeordnet ist, und wobei die Stirnradstufe (8) schrägverzahnte Stirnräder aufweist.

2. Seilbahngetriebe nach Anspruch 1,
**dadurch gekennzeichnet, dass** die mit der Schrägverzahnung versehene antriebsseitige Planetenstufe (6b) für beide Drehrichtungen korrekturgeschliffene Zahnräder aufweist.

3. Seilbahngetriebe nach Anspruch 1,
**dadurch gekennzeichnet, dass** der Motor (3) als ein direkt am Getriebegehäuse (4) angeflanschter Elektromotor ausgebildet ist.

4. Seilbahngetriebe nach Anspruch 3,
**dadurch gekennzeichnet, dass** der Elektromotor ein Bremsmotor ist, der eine auf die Antriebswelle (7) wirkende Bremsscheibe (9) umfasst, welche mit mindestens einem ortsfesten Bremssattel (10) zusammenwirkt.

5. Seilbahngetriebe nach Anspruch 1,
**dadurch gekennzeichnet, dass** bei der antriebsseitigen Planetenstufe (6a) der Antrieb über ein Sonnenrad (11') erfolgt, und das der Abtrieb über einen Planetenträger (12') erfolgt, wobei ein Hohlrad (13') ortsfest zum Getriebegehäuse (4) ausgebildet ist.

6. Seilbahngetriebe nach Anspruch 1,
**dadurch gekennzeichnet, dass** bei der abtriebsseitigen Planetenstufe (6b) der Antrieb über ein Sonnenrad (11") erfolgt, und das der Abtrieb über einen Planetenträger (12") erfolgt, wobei ein Hohlrad (13") ortsfest zum Getriebegehäuse (4) ausgebildet ist.

## Claims

1. An aerial tramway transmission (1) for driving a bullwheel (2) of an aerial tramway, comprising a plurality of series-connected planetary-gear stages (6a, 6b) accommodated in a vertically-aligned transmission housing (4) for speed reduction of the driving speed generated by a motor (3) for the bullwheel (2), **characterized in that** a drive-side planetary-gear stage (6a) has helical toothing, whereas a driven-side planetary-gear stage (6b) has straight toothing, wherein the drive shaft (7) is arranged with its axis in offset relation to the transmission axis (5) by means of a spur gear stage (8), and wherein the spur gear stage (8) includes helically toothed spur gears.

2. The aerial tramway transmission according to claim 1,
**characterized in that** the planetary-gear stage (6b) provided with the helical toothing has correction ground gears for both directions of rotation.

3. The aerial tramway transmission according to claim 1,
**characterized in that** the motor (3) is formed as an electric motor directly flanged to the transmission housing (4).

4. The aerial tramway transmission according to claim 3,
**characterized in that** the electric motor is a decelerating motor comprising a brake disk (9) acting on the drive shaft (7), which cooperates with at least one fixed brake caliper (10).

5. The aerial tramway transmission according to claim 1,
**characterized in that**, in the drive-side planetary-gear stage (6a), the driving side comprises a sun gear (11') and the driven side comprises a planet carrier (12'), wherein a hollow gear (13') is formed in fixed relation to the transmission housing (4).

6. The aerial tramway transmission according to claim 1,
**characterized in that**, in the driven-side planetary-gear stage (6b), the driving side comprises a sun gear (11") and the driven side comprises a planet carrier (12"), wherein a hollow gear (13') is formed in fixed relation to the transmission housing (4).

## Revendications

1. Transmission de funiculaire (1) pour l'entraînement d'une poulie à câble (2) d'un funiculaire, comprenant plusieurs étages planétaires (6a, 6b) logés dans un boîtier de mécanisme (4) orienté verticalement et montés les uns derrière les autres, pour la démultiplication de la vitesse de rotation d'entraînement engendrée par un moteur (3) vers une vitesse lente pour la poulie à câble (2), **caractérisée en ce qu'**un étage planétaire (6a) du côté entraînement comporte une denture oblique, et par contre un étage planétaire (6b) côté sortie possède une denture droite,
dans lequel l'arbre d'entraînement (7) est agencé en décalage axial par rapport à l'axe de la transmission (5) via un étage à engrenages droits (8), et dans lequel l'étage à engrenages droits (8) comprend des engrenages droits à denture oblique.

2. Transmission de funiculaire selon la revendication 1,
**caractérisée en ce que** l'étage planétaire (6b) du côté entraînement pourvu de la denture oblique comprend des engrenages meulés de façon corrigée pour les deux sens de rotation.

3. Transmission de funiculaire selon la revendication 1,
**caractérisée en ce que** le moteur (3) est réalisé sous forme de moteur électrique bridé directement sur le boîtier de transmission (4).

4. Transmission de funiculaire selon la revendication 3,
**caractérisée en ce que** le moteur électrique est un moteur-frein, qui comprend un disque de frein (9) agissant sur l'arbre d'entraînement (7) et coopérant avec au moins un étrier de frein stationnaire (10).

5. Transmission de funiculaire selon la revendication 1,
**caractérisée en ce que** dans l'étage planétaire (6a) du côté entraînement, l'entraînement a lieu au moyen d'une roue solaire (11'), et **en ce que** la sortie a lieu au moyen d'un porte-planétaires (12'), et une couronne à denture intérieure (13') est réalisée de manière stationnaire par rapport au boîtier de transmission (4).

6. Transmission de funiculaire selon la revendication 1,
**caractérisée en ce que** dans l'étage planétaire (6b) du côté sortie, l'entraînement a lieu au moyen d'une roue solaire (11"), et **en ce que** la sortie a lieu au moyen d'un porte-planétaires (12"), et une couronne à denture intérieure (13") est réalisée de manière stationnaire par rapport au boîtier de transmission (4).
